# EUROPEAN PATENT APPLICATION

(11) **EP 4 738 241 A1**
(43) Date of publication of application: **06.05.2026**
(21) Application number: 23946428.2
(22) Date of filing: 06.11.2023
(51) Int. Cl.: G06T 5/00, A47J 36/32, G06T 7/00

(54) **COOKING APPLIANCE CONTROL METHOD AND DEVICE, COOKING APPLIANCE AND STORAGE MEDIUM**

(30) Priority: 24.07.2023 CN 202310906385
(71) Applicant: Guangdong Midea Kitchen Appliances Manufacturing Co., Ltd., Foshan, Guangdong 528311 (CN)
(72) Inventor: WANG, Yaxuan, Foshan, Guangdong 528311 (CN)
(74) Representative: RGTH
(86) International application number: PCT/CN2023/130014
(87) International publication number: WO 2025/020349

(57) **Abstract**

The present application provides a cooking appliance control method and device, a cooking appliance and a storage medium. The control method comprises: in the process of cooking a food ingredient with a cooking appliance, generating at least one food ingredient image of the food ingredient; detecting the at least one food ingredient image, and determining at least one target image with pollutants in the image content; and restoring the at least one target image to a pollutant-free state.

## Description

### CROSS-REFERENCE TO RELATED APPLICATIONS

This application claims priority to Chinese Patent Application No. 202310906385.7 filed with the China National Intellectual Property Administration on July 24, 2023 and entitled "COOKING APPLIANCE CONTROL METHOD AND DEVICE, COOKING APPLIANCE AND STORAGE MEDIUM", the entire contents of which are herein incorporated by reference.

### FIELD

The present application relates to the technical field of household electrical appliances, and specifically relates to a control method for a cooking appliance and device, a cooking appliance and a storage medium.

### BACKGROUND

In related technologies, during a process where a user acquires images of the food ingredients being cooked through a cooking appliance, water droplets or mist may condense on the camera of the cooking appliance. This results in appearance of water droplets or mist on the food ingredient images, to lead to poor quality of the food ingredient images and affecting user experience.

### SUMMARY

The present application aims to solve at least one of the technical problems existing in the prior art.

Thus, a first aspect of the present application provides a control method for a cooking appliance.

A second aspect of the present application provides a cooking appliance control device.

A third aspect of the present application provides a cooking appliance control device.

A fourth aspect of the present application provides a cooking appliance.

A fifth aspect of the present application provides a computer-readable storage medium.

The first aspect of the present application provides a control method for a cooking appliance, comprising: during a process of cooking a food ingredient with a cooking appliance, generating at least one food ingredient image of the food ingredient; detecting the at least one food ingredient image, and determining at least one target image with contaminant in its image content; and restoring the at least one target image to a contaminant-free state.

The control method for a cooking appliance provided in the present application can be configured to acquire images of the cooking process of the food ingredient while the cooking appliance is cooking the food ingredients, and then the images are made available for the user to view, to meet the user's needs on the cooking process and improving user experience.

Furthermore, the cooking appliance can be provided with an image acquisition device, such as a camera or other device. The image acquisition device is disposed in the cooking cavity of the cooking appliance, and images of the food ingredients can be acquired during the cooking process of the food ingredients by the cooking appliance.

In some embodiments, during the process of cooking the food ingredients by the cooking appliance, the image acquisition device of the cooking appliance can be controlled to capture images of the food ingredients in the cooking cavity, to generate at least one food ingredient image of the food ingredients in the cooking cavity. It is understandable that the user can, according to their own needs, obtain the final image of the cooked food ingredients through the image acquisition device after the food ingredients are cooked. Additionally, food ingredient images at each cooking stage can further be acquired during the cooking process.

Furthermore, after the generation of at least one food ingredient image is completed, at least one food ingredient image can be detected to determine whether there are contaminant in the image content of the food ingredient image. The contaminant can be water droplets or mist; the contaminant can comprise water droplets or mist, i.e., whether water droplets or mist exist in the image content, to determine the target images containing contaminant in its image content. It is understandable that during the cooking process of food ingredients, the temperature in the cooking cavity rises, causing the moisture contained in the food ingredients to evaporate and then condense into water droplets or mist on the camera of the image acquisition device. Furthermore, the contaminant can further comprise oil droplets, oil stains, or other impurities displayed in the image. When contaminant condense on the camera, the acquired food ingredient images will show such contaminant, to degrade the quality of the food ingredient images and failing to meet the user's requirements for the quality of the food ingredient images.

Furthermore, in the case of detecting the presence of contaminant in the image content of at least one food ingredient image, i.e., in the case of determining that the at least one food ingredient image comprises the target image, restoration processing can be performed on the target image. That is, the parts of the image content of the food ingredient image that contain contaminant are restored to remove the contaminant from the image content while retain the original effect of the food ingredients in the food ingredient image, to meet the user's requirements for the quality of the food ingredient image.

In some embodiments, when there is only one food ingredient image, if contaminant exist in the image content of the food ingredient image, the regions with the contaminant can be restored based on other regions without contaminant in the image content of the food ingredient image. When there are a plurality of food ingredient images, the regions with the contaminant can be restored based on the regions in other images without contaminant that correspond to the regions with the contaminant.

The control method for a cooking appliance provided in the present application acquires images of food ingredients during the cooking process to generate at least one food ingredient image, to meet the user's personalized needs during cooking and improving user experience. Furthermore, in the case that contaminant exist in the image content of the at least one food ingredient image, the regions in the food ingredient image having contaminant can be restored to eliminate the impact of contaminant on the quality of the food ingredient image, retain the original effect of the food ingredients in the food ingredient image, further meet the user's requirements for the quality of the food ingredient image, and further enhance the use experience of the cooking appliance.

In addition, the control method for a cooking appliance in the above embodiment provided by the present application can further comprise the following additional technical features.

In some embodiments, the food ingredient image comprises a plurality of sub-regions. Detecting the at least one food ingredient image and determining at least one target image with contaminant in its image content comprises: traversing each food ingredient image to acquire the image features of each sub-region; and determining the at least one target image based on the image features.

In the embodiment, the food ingredient image can be divided into a plurality of sub-regions, then the plurality of sub-regions of the food ingredient image are detected sequentially during the detection of the food ingredient image, and then whether there are contaminant in the image content of each sub-region of the food ingredient image is determined. In the case that contaminant exist in any sub-region of the food ingredient image, the food ingredient image can be determined as a target image with contaminant in its image content.

In some embodiments, during the detection of the food ingredient image, first, the food ingredient image can be traversed to acquire the image features of each sub-region of the food ingredient image. Then, the image features of each sub-region are analyzed to determine whether there are contaminant in the image content of each sub-region of the food ingredient image, i.e., based on the image features of each sub-region of the food ingredient image, whether the food ingredient image is a target image with contaminant in its image content is determined.

In some embodiments, the image features comprise an optical flow direction, brightness, and color. Determining the at least one target image based on the image features comprises: determining the food ingredient image as the target image in the case that the optical flow direction of any sub-region is toward the direction of gravity and the brightness is greater than a preset brightness; or determining the food ingredient image as the target image in the case that the optical flow direction of any sub-region is toward the direction of gravity and the color is white.

In the embodiment, the image features of the food ingredient image can comprise the optical flow direction, the brightness and the color. In this way, after traversing the food ingredient image, whether there are contaminant in each sub-region based on the optical flow direction, the brightness, or the color of each sub-region of the food ingredient image can be determined.

In some embodiments, for contaminant formed by water droplets or mist, in the case that the optical flow direction of any sub-region of the food ingredient image is toward the direction of gravity and the brightness of the sub-region is greater than a preset brightness, it can be determined that the contaminant formed by water droplets or mist exist in the sub-region, i.e., the food ingredient image is the target image with contaminant in its image content.

It is understandable that when there are contaminant in the image content of the food ingredient image, the contaminant tend to move downward under the action of gravity, so the optical flow direction of the region with contaminant in the image content is toward the direction of gravity. Meanwhile, due to the light-reflecting property of the contaminant, the brightness of the region with contaminant in the image content is greater than that of other regions. Therefore, in the case of acquiring that the optical flow direction of any sub-region of the food ingredient image is toward the direction of gravity and the brightness is greater than a preset brightness, it can be determined that contaminant exist in the sub-region.

In some embodiments, for contaminant formed by water droplets or mist, in the case that the optical flow direction of any sub-region of the food ingredient image is toward the direction of gravity and the image color within the sub-region is white, it can be determined that contaminant formed by water droplets or mist exist in the sub-region, i.e., the food ingredient image is the target image with contaminant in its image content.

It is understandable that in the case that there are contaminant formed by water droplets or mist in the image content of the food ingredient image, the contaminant formed by water droplets or mist tend to move downward under the action of gravity, so the optical flow direction of the region with contaminant formed by water droplets or mist in the image content is toward the direction of gravity. Meanwhile, the contaminant formed by water droplets or mist will appear white or nearly white when illuminated by light. Therefore, in the case of acquiring that the optical flow direction of any sub-region of the food ingredient image is toward the direction of gravity and the color is white or nearly white, it can be determined that contaminant exist in the sub-region.

In some embodiments, the image features comprise a refractive index. Determining the at least one target image based on the image features comprises: determining the food ingredient image as the target image in the case that the refractive index of any sub-region is less than a preset refractive index.

In the embodiment, the image features can further comprise the refractive index. Correspondingly, during the detection of each sub-region of the food ingredient image, if the refractive index in any sub-region of the food ingredient image is less than a preset refractive index, it indicates that contaminant exist in the sub-region, i.e., it can be determined that the food ingredient image is the target image with contaminant in its image content.

It is understandable that in the case that contaminant formed by water droplets or mist condense on the camera of the image acquisition device, the density of water is greater than that of air, so the refractive index of the sub-region of the food ingredient image with the contaminant will be significantly lower than that of other sub-regions after the food ingredient image is generated. Correspondingly, when the food ingredient image is detected, in the case of determining that the food ingredient image has a sub-region with a refractive index less than the preset refractive index, it can be determined that the food ingredient image is the target image with contaminant formed by water droplets or mist in its image content.

In some embodiments, the image features comprise brightness, saturation, and contrast. Determining the at least one target image based on the image features comprises: determining the food ingredient image as the target image in the case that the brightness, saturation, or contrast of any sub-region is greater than a preset value.

In the embodiment, the image features of the food ingredient image can further comprise the brightness, saturation, and contrast. Correspondingly, during the detection of the food ingredient image, based on the brightness, saturation, and contrast of each sub-region of the food ingredient image, whether there are contaminant in the sub-region can be determined.

After traversing the food ingredient image, the brightness, saturation, and contrast of each sub-region of the food ingredient image are determined. If the brightness in any sub-region of the food ingredient image is greater than a preset brightness value, it indicates that contaminant exist in the sub-region. In some embodiments, in the case that the saturation in any sub-region of the food ingredient image is greater than a preset saturation, it indicates that contaminant exist in the sub-region. In the case that the contrast of any sub-region of the food ingredient image is greater than a preset contrast, it indicates that contaminant exist in the sub-region.

In some embodiments, determining the at least one target image based on the image features comprises: determining the food ingredient image as the target image in the case that the difference between the image features of any two adjacent sub-regions is greater than a first preset difference.

In the embodiment, after traversing the food ingredient image, the image features of each sub-region of the food ingredient image are determined. Furthermore, whether there are contaminant in the sub-regions can be determined based on the difference between the image features of adjacent sub-regions.

In the case that the difference between the image features of any two adjacent sub-regions is greater than the first preset difference, it can be determined that contaminant exist in at least one of the two adjacent sub-regions, i.e., the continuity between the two adjacent sub-regions of the same food ingredient image is not satisfied.

It is understandable that in the same food ingredient image, if there is not any sub-region with contaminant, the image features of two adjacent sub-regions will show a continuous transition. Therefore, if the difference between the image features of any two adjacent sub-regions is greater than the first preset difference, it indicates that the continuity between the two adjacent sub-regions of the food ingredient image is not satisfied, and thus it can be determined that contaminant exist in the image content of the food ingredient image.

In some embodiments, determining the at least one target image based on the image features comprises: in the case that the difference between the image features of the same sub-region in two food ingredient images generated at adjacent time points is greater than a second preset difference, determining the later generated food ingredient image as the target image.

In the embodiment, in the case that there are a plurality of food ingredient images, the region with contaminant can be restored based on the regions in other images without contaminant that correspond to the region with contaminant.

After traversing each food ingredient image, the image features of each corresponding sub-region in two food ingredient images generated at adjacent time points can be compared. Moreover, in the case that the difference between the image features of the same sub-region in the two food ingredient images generated at adjacent time points is greater than a second preset difference, it can be determined that contaminant exist in the image content of at least one of the two food ingredient images generated at adjacent time points.

It is understandable that in the case that there is not any contaminant in the food ingredient images, the image features of the same sub-region in food ingredient images generated at adjacent time points will show a continuous transition. Therefore, in the case that the difference between the image features of the same sub-region in two food ingredient images generated at adjacent time points is greater than the second preset difference, it can be determined that contaminant exist in the image content of at least one of the two food ingredient images generated at adjacent time points.

In some embodiments, restoring the at least one target image to a contaminant-free state comprises: determining a change trend of the food ingredients in the sub-regions with contaminant in the target image based on at least one food ingredient image generated before the target image; and restoring the sub-regions with contaminant in the target image based on the change trend of the food ingredients in the sub-regions with contaminant, to restore the at least one target image to the contaminant-free state.

In the embodiment, after determining that a food ingredient image is the target image with contaminant in its image content, the sub-regions of the target image with contaminant in their image content can be restored based on at least one food ingredient image generated before the target image, to eliminate the contaminant in the target image and ensure the image quality of the target image.

The change trend of the food ingredients in the sub-regions with contaminant can be determined based on at least one food ingredient image generated before the target image. That is, the change trend of the food ingredients in the image content is predicted based on the at least one previously generated food ingredient image, and then the sub-regions with contaminant in the target image are restored based on the changed regions of the food ingredients, and the food ingredients in the sub-regions with contaminant in the target image are restored to a real image of the food ingredients, ensuring the quality of the food ingredient image.

In some embodiments, restoring the at least one target image comprises: acquiring a first sub-region with contaminant in the target image; acquiring a second sub-region, which corresponds to the first sub-region, in a food ingredient image immediately preceding the target image; replacing the first sub-region with the second sub-region; and performing smoothing processing on the replaced target image based on a preset algorithm to restore the at least one target image to the contaminant-free state.

In the embodiment, after determining that a food ingredient image is the target image with contaminant in its image content, the sub-regions of the target image with contaminant in their image content can be restored based on at least one food ingredient image generated before the target image, to eliminate the contaminant in the target image and ensure the image quality of the target image.

The first sub-region with contaminant in the target image is determined first, and then the second sub-region, which corresponds to the first sub-region, in the food ingredient image generated before the target image is acquired. The first sub-region is replaced with the second sub-region, i.e., the first sub-region with contaminant in the target image is deleted, and the second sub-region of the food ingredient image immediately preceding the target image, which corresponds to the first sub-region and does not have any contaminant, is placed into the position of the first sub-region.

It is understandable that the contents of the food ingredient images displayed in the first sub-region and the second sub-region are the same, so replacing the first sub-region with the second sub-region can achieve eliminating the contaminant in the image content. Furthermore, smoothing processing is performed on the replaced target image based on the preset algorithm, to realize the restoration of the target image.

In some embodiments, restoring the at least one target image comprises: acquiring a third sub-region with contaminant in the target image; acquiring a fourth sub-region, which corresponds to the third sub-region, in the food ingredient image immediately preceding the target image; and adjusting the image features of the third sub-region based on the image features of the fourth sub-region to restore the at least one target image.

In the embodiment, after determining that a food ingredient image is the target image with contaminant in its image content, the sub-regions of the target image with contaminant in their image content can be restored based on at least one food ingredient image generated before the target image, to eliminate the contaminant in the target image and ensure the image quality of the target image.

The third sub-region with contaminant in the target image is determined first, and then the fourth sub-region, which corresponds to the third sub-region, in the food ingredient image generated before the target image is acquired. Then the image features of the fourth sub-region are acquired, and the image features of the third sub-region are adjusted based on the image features of the fourth sub-region, to realize the restoration of the target image.

It is understandable that the image contents displayed in the third sub-region and the fourth sub-region are the same, and the time interval between the generation of the third sub-region and the fourth sub-region is short, and therefore, the image features of the third sub-region can be adjusted based on the image features of the fourth sub-region, to eliminate the contaminant in the third sub-region to achieve the restoration of the target image.

In some embodiments, restoring the at least one target image comprises inputting the at least one target image into a preset neural network to restore the at least one target image.

In the embodiment, after the target image with contaminant in its image content is determined, the target image can further be input into the preset neural network, to output the restored target image through the preset neural network.

It is understandable that the preset neural network is trained with a large amount of historical image data, wherein historical images comprise images with contaminant and corresponding images without contaminant. Therefore, a functional mapping relationship of a contaminant water mist region from blurred image information to original clear image information is fitted through the preset neural network, and the original clear image of the contaminant water mist region is thus restored based on the fitted functional mapping relationship.

In some embodiments, the contaminant comprise water droplets or water mist.

In the embodiment, the contaminant can comprise the water droplets or water mist. That is, the target image contains water droplets or water mist in its image content. Furthermore, the contaminant can further comprise oil droplets, oil stains, or other impurities displayed in the image.

According to a second aspect of the present application, a cooking appliance control device is provided, comprising: a generating unit configured to generate at least one food ingredient image of food ingredients during a process of cooking the food ingredients with a cooking appliance; a detecting unit configured to detect the at least one food ingredient image and determine at least one target image with contaminant in its image content; and a restoring unit configured to restore the at least one target image to a contaminant-free state.

The cooking appliance control device provided by the present application acquires images of food ingredients through the generating unit during the cooking process to generate at least one food ingredient image, and to meet the personalized needs of users during cooking and improves user experience. Furthermore, the detecting unit can detect at least one food ingredient image with contaminant in its image content. In addition, in the case that contaminant exist in the image content of the at least one food ingredient image, the restoring unit restores the regions with contaminant in the food ingredient image, to eliminate the impact of contaminant on the quality of the food ingredient image, retain the original effect of the food ingredients on the food ingredient image, further meet the user's requirements for the quality of the food ingredient image, and further enhance the user experience of using the cooking appliance.

Furthermore, the food ingredient image comprises a plurality of sub-regions, and the detecting unit is configured to: traverse each food ingredient image to obtain the image features of each sub-region; and determine at least one target image based on the image features.

Furthermore, the image features comprise an optical flow direction, brightness, and color, and the detecting unit is further configured to: determine the food ingredient image as a target image in the case that the optical flow direction of any sub-region is toward the direction of gravity and the brightness is greater than a preset brightness; or determine the food ingredient image as a target image in the case that the optical flow direction of any sub-region is toward the direction of gravity and the color is white.

Furthermore, the image features comprise a refractive index, and the detecting unit is further configured to determine the food ingredient image as a target image in the case that the refractive index of any sub-region is less than a preset refractive index.

Furthermore, the image features comprise brightness, saturation, and contrast, and the detecting unit is further configured to determine the food ingredient image as a target image in the case that the brightness, saturation, or contrast of any sub-region is greater than a preset value.

Furthermore, the detecting unit is further configured to determine the food ingredient image as a target image in the case that the difference between the image features of any two adjacent sub-regions is greater than a first preset difference.

Furthermore, the detecting unit is further configured to determine, in the case that the difference between the image features of the same sub-region in two food ingredient images generated at adjacent time points is greater than a second preset difference, the later generated food ingredient image as a target image.

Furthermore, the restoring unit is configured to: determine the change trend of the food ingredients in the sub-regions with contaminant in the target image based on at least one food ingredient image generated before the target image; and restore the sub-regions with contaminant in the target image based on the change trend of the food ingredients in the sub-regions with contaminant.

Furthermore, the restoring unit is further configured to: acquire a first sub-region with contaminant in the target image; acquire a second sub-region, which corresponds to the first sub-region, in a food ingredient image immediately preceding the target image; replace the first sub-region with the second sub-region; and perform smoothing processing on the replaced target image based on a preset algorithm to restore the at least one target image.

Furthermore, the restoring unit is further configured to: acquire a third sub-region with contaminant in the target image; acquire a fourth sub-region, which corresponds to the third sub-region, in the food ingredient image immediately preceding the target image; and adjust the image features of the third sub-region based on the image features of the fourth sub-region to restore the at least one target image.

Furthermore, the restoring unit is further configured to: input the at least one target image into a preset neural network to restore the at least one target image.

According to a third aspect of the present application, a cooking appliance control device is provided, comprising a processor and a memory, and the memory stores a program or an instruction that can run in the processor. The program or instruction, when executed by the processor, causes the processor to perform the steps of the control method for a cooking appliance according to the first aspect described above.

The cooking appliance control device provided by the present application comprises the processor and the memory, and further comprises a program or an instruction stored in the memory. The program or instruction, when executed by the processor, causes the processor to perform the steps of the control method for a cooking appliance according to the first aspect described above. Therefore, the cooking appliance control device has all the beneficial effects of the above control method for a cooking appliance, which will not be repeated here.

According to a fourth aspect of the present application, a cooking appliance is provided, comprising the cooking appliance control device according to any one of the above embodiments.

The cooking appliance provided by the present application comprises the cooking appliance control device according to any one of the above embodiments. Therefore, the cooking appliance has all the beneficial effects of the above cooking appliance control device, which will not be repeated here.

According to a fifth aspect of the present application, a computer-readable storage medium is provided, and a program or an instruction is stored in the computer-readable storage medium. the program or instruction, when executed by a processor, causes the processor to perform the steps of the control method for a cooking appliance according to any one of the above embodiments.

The computer-readable storage medium provided in the present application stores a programs or an instruction therein. The program or instruction, when executed by a processor, causes the processor to perform the steps of the control method for a cooking appliance according to any one of the above embodiments, and therefore, the storage medium has all the beneficial effects of the aforementioned control method for a cooking appliance, which will not be repeated here.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in conjunction with the following accompanying drawings, wherein:
FIG. 1 shows a flow chart of a control method for a cooking appliance according to an embodiment of the present application;
FIG.2 shows a flow chart of a control method for a cooking appliance according to another embodiment of the present application;
FIG.3 shows a flow chart of a control method for a cooking appliance according to another embodiment of the present application;
FIG.4 shows a flow chart of a control method for a cooking appliance according to another embodiment of the present application;
FIG.5 shows a flow chart of a control method for a cooking appliance according to another embodiment of the present application;
FIG.6 shows a flow chart of a control method for a cooking appliance according to another embodiment of the present application;
FIG.7 shows a flow chart of a control method for a cooking appliance according to another embodiment of the present application;
FIG.8 shows a flow chart of a control method for a cooking appliance according to another embodiment of the present application;
FIG.9 shows a flow chart of a control method for a cooking appliance according to another embodiment of the present application;
FIG.10 shows a flow chart of a control method for a cooking appliance according to another embodiment of the present application;
FIG.11 shows a flow chart of a control method for a cooking appliance according to another embodiment of the present application; and
FIG.12 shows a flow chart of a control method for a cooking appliance according to another embodiment of the present application.

### DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be implemented using other embodiments other than these described herein. Therefore, the protection scope of the present application is not limited to the specific embodiments disclosed in the following text.

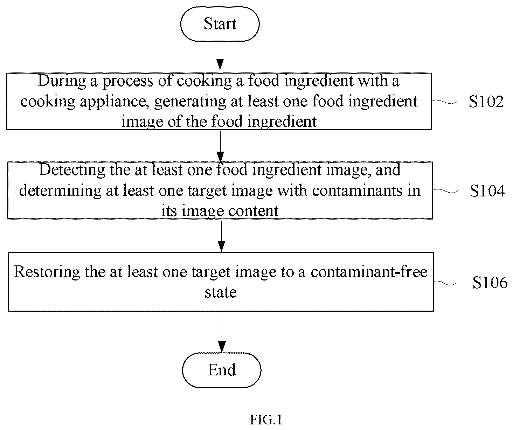

A control method for a cooking appliance and device, a cooking appliance and a storage medium according to some embodiments of the present application are described hereinafter by referring to FIG. 1 to FIG.12.

As shown in FIG. 1, according to an embodiment of the present application, a control method for a cooking appliance is provided, comprising:
S102, during a process of cooking a food ingredient with a cooking appliance, generating at least one food ingredient image of the food ingredient;
S104, detecting the at least one food ingredient image, and determining at least one target image with contaminant in its image content; and
S106, restoring the at least one target image to a contaminant-free state.

The control method for a cooking appliance provided in the present application can be configured to acquire images of the cooking process of the food ingredient while the cooking appliance is cooking the food ingredients, and then the images are made available for the user to view, to meet the user's needs on the cooking process and improving user experience.

Furthermore, the cooking appliance can be provided with an image acquisition device, such as a camera or other device. The image acquisition device is disposed in the cooking cavity of the cooking appliance, and images of the food ingredients can be acquired during the cooking process of the food ingredients by the cooking appliance.

During the process of cooking the food ingredients by the cooking appliance, the image acquisition device of the cooking appliance can be controlled to capture images of the food ingredients in the cooking cavity, to generate at least one food ingredient image of the food ingredients in the cooking cavity. It is understandable that the user can, according to their own needs, obtain the final image of the cooked food ingredients through the image acquisition device after the food ingredients are cooked. Additionally, food ingredient images at each cooking stage can be acquired during the cooking process.

Furthermore, after the generation of at least one food ingredient image is completed, at least one food ingredient image can be detected to determine whether there are contaminant in the image content of the food ingredient image. The contaminant can be water droplets or mist; the contaminant can comprise water droplets or mist, i.e., whether water droplets or mist exist in the image content, to determine the target images containing contaminant in its image content. It is understandable that during the cooking process of food ingredients, the temperature in the cooking cavity rises, causing the moisture contained in the food ingredients to evaporate and then condense into water droplets or mist on the camera of the image acquisition device. Furthermore, the contaminant can further comprise oil droplets, oil stains, or other impurities displayed in the image. When contaminant condense on the camera, the acquired food ingredient images will show such contaminant, to degrade the quality of the food ingredient images and failing to meet the user's requirements for the quality of the food ingredient images.

Furthermore, in the case of detecting the presence of contaminant in the image content of at least one food ingredient image, i.e., in the case of determining that the at least one food ingredient image comprises the target image, restoration processing can be performed on the target image. That is, the parts of the image content of the food ingredient image that contain contaminant are restored to remove the contaminant from the image content while retain the original effect of the food ingredients in the food ingredient image, to meet the user's requirements for the quality of the food ingredient image.

When there is only one food ingredient image, if contaminant exist in the image content of the food ingredient image, the regions with the contaminant can be restored based on other regions without contaminant in the image content of the food ingredient image. When there are a plurality of food ingredient images, the regions with the contaminant can be restored based on the regions in other images without contaminant that correspond to the regions with the contaminant.

The control method for a cooking appliance provided in the present application acquires images of food ingredients during the cooking process to generate at least one food ingredient image, to meet the user's personalized needs during cooking and improving user experience. Furthermore, in the case that contaminant exist in the image content of the at least one food ingredient image, the regions in the food ingredient image having contaminant can be restored to eliminate the impact of contaminant on the quality of the food ingredient image, retain the original effect of the food ingredients in the food ingredient image, further meet the user's requirements for the quality of the food ingredient image, and further enhance the use experience of the cooking appliance.

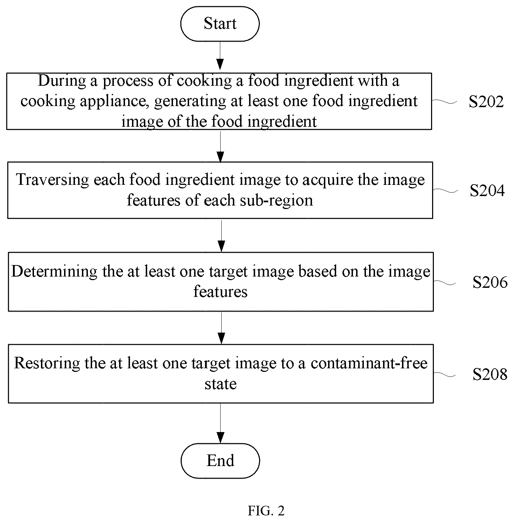

According to an embodiment of the present application, as shown in FIG. 2, a control method for a cooking appliance is provided, comprising:
S202, during a process of cooking a food ingredient with a cooking appliance, generating at least one food ingredient image of the food ingredient;
S204, traversing each food ingredient image to acquire the image features of each sub-region;
S206, determining the at least one target image based on the image features; and
S208, restoring the at least one target image to a contaminant-free state.

In the embodiment, the food ingredient image can be divided into a plurality of sub-regions, then the plurality of sub-regions of the food ingredient image are detected sequentially during the detection of the food ingredient image, and then whether there are contaminant in the image content of each sub-region of the food ingredient image is determined. In the case that contaminant exist in any sub-region of the food ingredient image, the food ingredient image can be determined as a target image with contaminant in its image content.

During the detection of the food ingredient image, first, the food ingredient image can be traversed to acquire the image features of each sub-region of the food ingredient image. Then, the image features of each sub-region are analyzed to determine whether there are contaminant in the image content of each sub-region of the food ingredient image, i.e., based on the image features of each sub-region of the food ingredient image, whether the food ingredient image is a target image with contaminant in its image content is determined.

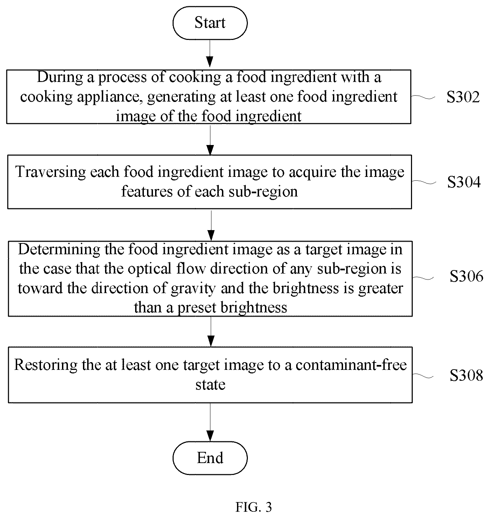

According to an embodiment of the present application, as shown in FIG. 3, a control method for a cooking appliance is provided, comprising:
S302, during a process of cooking a food ingredient with a cooking appliance, generating at least one food ingredient image of the food ingredient;
S304, traversing each food ingredient image to acquire the image features of each sub-region;
S306, determining the food ingredient image as the target image in the case that the optical flow direction of any sub-region is toward the direction of gravity and the brightness is greater than a preset brightness; and
S308, restoring the at least one target image to a contaminant-free state.

In the embodiment, the image features of the food ingredient image can comprise the optical flow direction, the brightness and the color. In this way, after traversing the food ingredient image, whether there are contaminant in each sub-region based on the optical flow direction, the brightness, or the color of each sub-region of the food ingredient image can be determined.

For contaminant formed by water droplets or mist, in the case that the optical flow direction of any sub-region of the food ingredient image is toward the direction of gravity and the brightness of the sub-region is greater than a preset brightness, it can be determined that the contaminant formed by water droplets or mist exist in the sub-region, i.e., the food ingredient image is the target image with contaminant in its image content.

It is understandable that when there are contaminant in the image content of the food ingredient image, the contaminant tend to move downward under the action of gravity, so the optical flow direction of the region with contaminant in the image content is toward the direction of gravity. Meanwhile, due to the light-reflecting property of the contaminant, the brightness of the region with contaminant in the image content is greater than that of other regions. Therefore, in the case of acquiring that the optical flow direction of any sub-region of the food ingredient image is toward the direction of gravity and the brightness is greater than a preset brightness, it can be determined that contaminant exist in the sub-region.

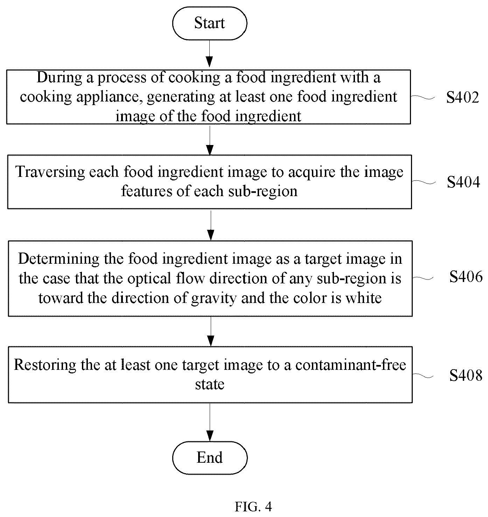

According to an embodiment of the present application, as shown in FIG. 4, a control method for a cooking appliance is provided, comprising:
S402, during a process of cooking a food ingredient with a cooking appliance, generating at least one food ingredient image of the food ingredient;
S404, traversing each food ingredient image to acquire the image features of each sub-region;
S406, determining the food ingredient image as the target image in the case that the optical flow direction of any sub-region is toward the direction of gravity and the color is white; and
S408, restoring the at least one target image to a contaminant-free state.

In the embodiment, the image features of the food ingredient image can comprise the optical flow direction, the brightness and the color. In this way, after traversing the food ingredient image, whether there are contaminant in each sub-region based on the optical flow direction, the brightness, or the color of each sub-region of the food ingredient image can be determined.

For contaminant formed by water droplets or mist, in the case that the optical flow direction of any sub-region of the food ingredient image is toward the direction of gravity and the image color of the sub-region is white, it can be determined that the contaminant formed by water droplets or mist exist in the sub-region, i.e., the food ingredient image is the target image with contaminant in its image content.

It is understandable that in the case that there are contaminant formed by water droplets or mist in the image content of the food ingredient image, the contaminant formed by water droplets or mist tend to move downward under the action of gravity, so the optical flow direction of the region with contaminant formed by water droplets or mist in the image content is toward the direction of gravity. Meanwhile, the contaminant formed by water droplets or mist will appear white when illuminated by light. Therefore, in the case of acquiring that the optical flow direction of any sub-region of the food ingredient image is toward the direction of gravity and the color is white or nearly white, it can be determined that contaminant exist in the sub-region.

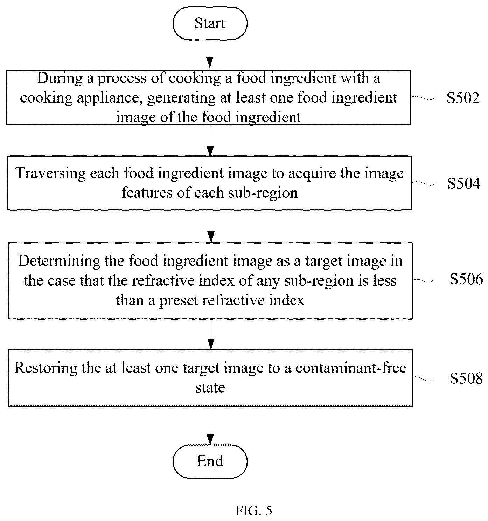

According to an embodiment of the present application, as shown in FIG. 5, a control method for a cooking appliance is provided, comprising:
S502, during a process of cooking a food ingredient with a cooking appliance, generating at least one food ingredient image of the food ingredient;
S504, traversing each food ingredient image to acquire the image features of each sub-region;
S506, determining the food ingredient image as the target image in the case that the refractive index of any sub-region is less than a preset refractive index; and
S508, restoring the at least one target image to a contaminant-free state.

In the embodiment, the image features can further comprise the refractive index. Correspondingly, during the detection of each sub-region of the food ingredient image, if the refractive index in any sub-region of the food ingredient image is less than a preset refractive index, it indicates that contaminant exist in the sub-region, i.e., it can be determined that the food ingredient image is the target image with contaminant in its image content.

It is understandable that in the case that contaminant formed by water droplets or mist condense on the camera of the image acquisition device, the density of water is greater than that of air, so the refractive index of the sub-region of the food ingredient image with the contaminant will be significantly lower than that of other sub-regions after the food ingredient image is generated. Correspondingly, when the food ingredient image is detected, in the case of determining that the food ingredient image has a sub-region with a refractive index less than the preset refractive index, it can be determined that the food ingredient image is the target image with contaminant formed by water droplets or mist in its image content.

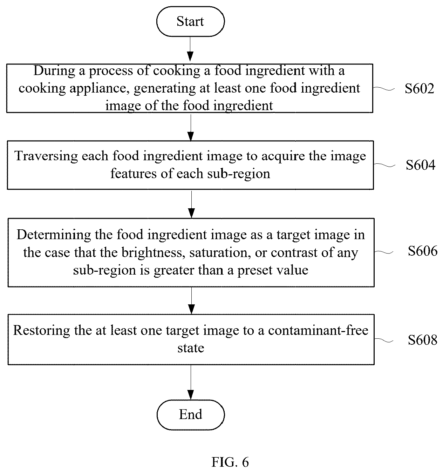

According to an embodiment of the present application, as shown in FIG. 6, a control method for a cooking appliance is provided, comprising:
S602, during a process of cooking a food ingredient with a cooking appliance, generating at least one food ingredient image of the food ingredient;
S604, traversing each food ingredient image to acquire the image features of each sub-region;
S606, determining the food ingredient image as the target image in the case that the brightness, saturation, or contrast of any sub-region is greater than a preset value; and
S608, restoring the at least one target image to a contaminant-free state.

In the embodiment, the image features of the food ingredient image can further comprise the brightness, saturation, and contrast. Correspondingly, during the detection of the food ingredient image, based on the brightness, saturation, and contrast of each sub-region of the food ingredient image, whether there are contaminant in the sub-region can be determined.

After traversing the food ingredient image, the brightness, saturation, and contrast of each sub-region of the food ingredient image are determined. If the brightness in any sub-region of the food ingredient image is greater than a preset brightness value, it indicates that contaminant exist in the sub-region. In some embodiments, in the case that the saturation in any sub-region of the food ingredient image is greater than a preset saturation, it indicates that contaminant exist in the sub-region. In the case that the contrast of any sub-region of the food ingredient image is greater than a preset contrast, it indicates that contaminant exist in the sub-region.

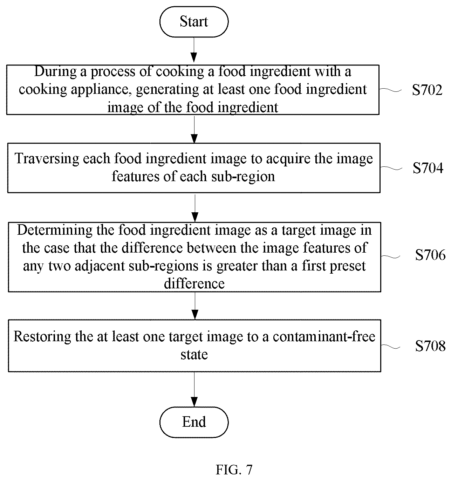

According to an embodiment of the present application, as shown in FIG. 7, a control method for a cooking appliance is provided, comprising:
S702, during a process of cooking a food ingredient with a cooking appliance, generating at least one food ingredient image of the food ingredient;
S704, traversing each food ingredient image to acquire the image features of each sub-region;
S706, determining the food ingredient image as the target image in the case that the difference between the image features of any two adjacent sub-regions is greater than a first preset difference; and
S708, restoring the at least one target image to a contaminant-free state.

In the embodiment, after traversing the food ingredient image, the image features of each sub-region of the food ingredient image are determined. Furthermore, whether there are contaminant in the sub-regions can be determined based on the difference between the image features of adjacent sub-regions.

In the case that the difference between the image features of any two adjacent sub-regions is greater than the first preset difference, it can be determined that contaminant exist in at least one of the two adjacent sub-regions, i.e., the continuity between the two adjacent sub-regions of the same food ingredient image is not satisfied.

It is understandable that in the same food ingredient image, if there is not any sub-region with contaminant, the image features of two adjacent sub-regions will show a continuous transition. Therefore, if the difference between the image features of any two adjacent sub-regions is greater than the first preset difference, it indicates that the continuity between the two adjacent sub-regions of the food ingredient image is not satisfied, and thus it can be determined that contaminant exist in the image content of the food ingredient image.

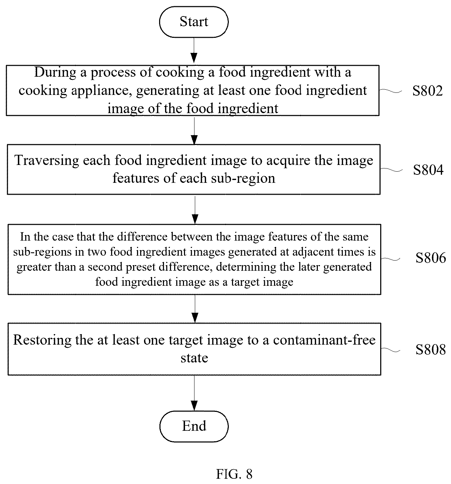

According to an embodiment of the present application, as shown in FIG. 8, a control method for a cooking appliance is provided, comprising:
S802, during a process of cooking a food ingredient with a cooking appliance, generating at least one food ingredient image of the food ingredient;
S804, traversing each food ingredient image to acquire the image features of each sub-region;
S806, in the case that the difference between the image features of the same sub-region in two food ingredient images generated at adjacent time points is greater than a second preset difference, determining the later generated food ingredient image as the target image; and
S808, restoring the at least one target image to a contaminant-free state.

In the embodiment, in the case that there are a plurality of food ingredient images, the region with contaminant can be restored based on the regions in other images without contaminant that correspond to the region with contaminant.

After traversing each food ingredient image, the image features of each corresponding sub-region in two food ingredient images generated at adjacent time points can be compared. Moreover, in the case that the difference between the image features of the same sub-region in the two food ingredient images generated at adjacent time points is greater than a second preset difference, it can be determined that contaminant exist in the image content of at least one of the two food ingredient images generated at adjacent time points.

It is understandable that in the case that there is not any contaminant in the food ingredient images, the image features of the same sub-region in food ingredient images generated at adjacent time points will show a continuous transition. Therefore, in the case that the difference between the image features of the same sub-region in two food ingredient images generated at adjacent time points is greater than the second preset difference, it can be determined that contaminant exist in the image content of at least one of the two food ingredient images generated at adjacent time points.

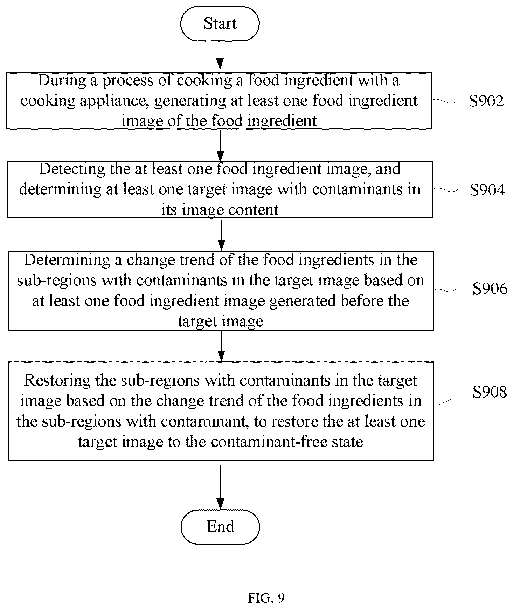

According to an embodiment of the present application, as shown in FIG. 9, a control method for a cooking appliance is provided, comprising:
S902, during a process of cooking a food ingredient with a cooking appliance, generating at least one food ingredient image of the food ingredient;
S904, detecting the at least one food ingredient image, and determining at least one target image with contaminant in its image content;
S906, determining a change trend of the food ingredients in the sub-regions with contaminant in the target image based on at least one food ingredient image generated before the target image; and
S908, restoring the sub-regions with contaminant in the target image based on the change trend of the food ingredients in the sub-regions with contaminant, to restore the at least one target image to the contaminant-free state.

In the embodiment, after determining that a food ingredient image is the target image with contaminant in its image content, the sub-regions of the target image with contaminant in their image content can be restored based on at least one food ingredient image generated before the target image, to eliminate the contaminant in the target image and ensure the image quality of the target image.

The change trend of the food ingredients in the sub-regions with contaminant can be determined based on at least one food ingredient image generated before the target image. That is, the change trend of the food ingredients in the image content is predicted based on the at least one previously generated food ingredient image, and then the sub-regions with contaminant in the target image are restored based on the changed regions of the food ingredients, and the food ingredients in the sub-regions with contaminant in the target image are restored to a real image of the food ingredients, ensuring the quality of the food ingredient image.

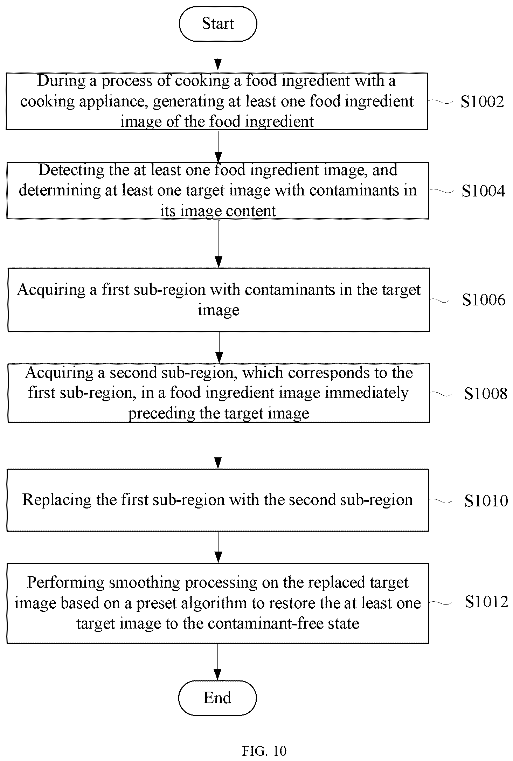

According to an embodiment of the present application, as shown in FIG. 10, a control method for a cooking appliance is provided, comprising:
S1002, during a process of cooking a food ingredient with a cooking appliance, generating at least one food ingredient image of the food ingredient;
S1004, detecting the at least one food ingredient image, and determining at least one target image with contaminant in its image content;
S1006, acquiring a first sub-region with contaminant in the target image;
S1008, acquiring a second sub-region, which corresponds to the first sub-region, in a food ingredient image immediately preceding the target image;
S1010, replacing the first sub-region with the second sub-region; and
S1012, performing smoothing processing on the replaced target image based on a preset algorithm to restore the at least one target image to the contaminant-free state.

In the embodiment, after determining that a food ingredient image is the target image with contaminant in its image content, the sub-regions of the target image with contaminant in their image content can be restored based on at least one food ingredient image generated before the target image, to eliminate the contaminant in the target image and ensure the image quality of the target image.

The first sub-region with contaminant in the target image is determined first, and then the second sub-region, which corresponds to the first sub-region, in the food ingredient image generated before the target image is acquired. The first sub-region is replaced with the second sub-region, i.e., the first sub-region with contaminant in the target image is deleted, and the second sub-region of the food ingredient image immediately preceding the target image, which corresponds to the first sub-region and does not have any contaminant, is placed into the position of the first sub-region.

It is understandable that the contents of the food ingredient images displayed in the first sub-region and the second sub-region are the same, so replacing the first sub-region with the second sub-region can achieve eliminating the contaminant in the image content. Furthermore, smoothing processing is performed on the replaced target image based on the preset algorithm, to realize the restoration of the target image.

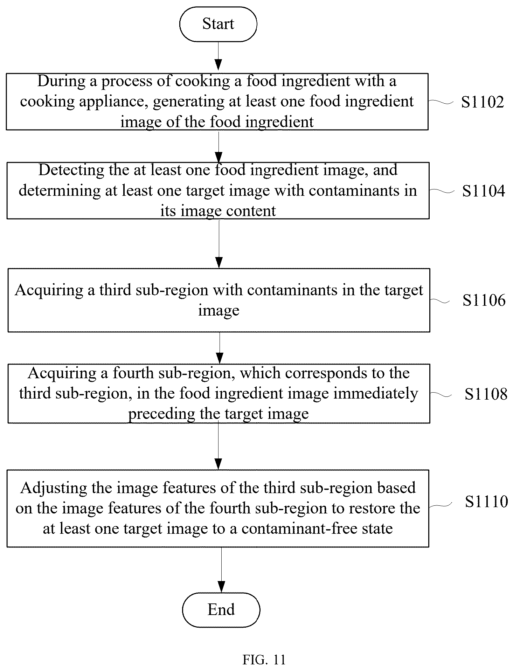

According to an embodiment of the present application, as shown in FIG. 11, a control method for a cooking appliance is provided, comprising:
S1102, during a process of cooking a food ingredient with a cooking appliance, generating at least one food ingredient image of the food ingredient;
S1104, detecting the at least one food ingredient image, and determining at least one target image with contaminant in its image content;
S1106, acquiring a third sub-region with contaminant in the target image;
S1108, acquiring a fourth sub-region, which corresponds to the third sub-region, in the food ingredient image immediately preceding the target image; and
S1110, adjusting the image features of the third sub-region based on the image features of the fourth sub-region to restore the at least one target image to the contaminant-free state.

In the embodiment, after determining that a food ingredient image is the target image with contaminant in its image content, the sub-regions of the target image with contaminant in their image content can be restored based on at least one food ingredient image generated before the target image, to eliminate the contaminant in the target image and ensure the image quality of the target image.

The third sub-region with contaminant in the target image is determined first, and then the fourth sub-region, which corresponds to the third sub-region, in the food ingredient image generated before the target image is acquired. Then the image features of the fourth sub-region are acquired, and the image features of the third sub-region are adjusted based on the image features of the fourth sub-region, to realize the restoration of the target image.

It is understandable that the image contents displayed in the third sub-region and the fourth sub-region are the same, and the time interval between the generation of the third sub-region and the fourth sub-region is short, and therefore, the image features of the third sub-region can be adjusted based on the image features of the fourth sub-region, to eliminate the contaminant in the third sub-region to achieve the restoration of the target image.

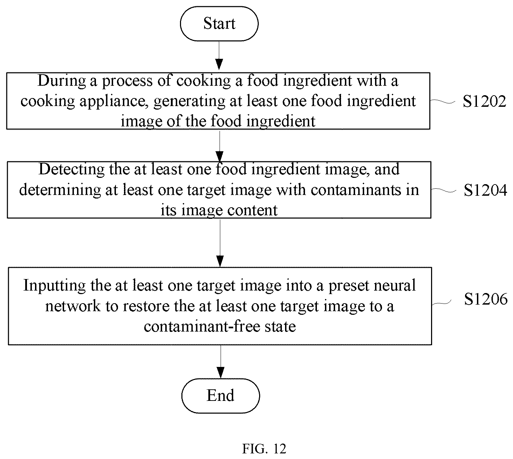

According to an embodiment of the present application, as shown in FIG. 12, a control method for a cooking appliance is provided, comprising:
S1202, during a process of cooking a food ingredient with a cooking appliance, generating at least one food ingredient image of the food ingredient;
S1204, detecting the at least one food ingredient image, and determining at least one target image with contaminant in its image content;
S1206, inputting the at least one target image into a preset neural network to restore the at least one target image to the contaminant-free state.

In the embodiment, after the target image with contaminant in its image content is determined, the target image can further be input into the preset neural network, to output the restored target image through the preset neural network.

It is understandable that the preset neural network is trained with a large amount of historical image data, wherein historical images comprise images with contaminant and corresponding images without contaminant. Therefore, a functional mapping relationship of a contaminant water mist region from blurred image information to original clear image information is fitted through the preset neural network, and the original clear image of the contaminant water mist region is thus restored based on the fitted functional mapping relationship.

According to a second aspect of the present application, a cooking appliance control device is provided, comprising: a generating unit configured to generate at least one food ingredient image of food ingredients during a process of cooking the food ingredients with a cooking appliance; a detecting unit configured to detect the at least one food ingredient image and determine at least one target image with contaminant in its image content; and a restoring unit configured to restore the at least one target image to a contaminant-free state.

The cooking appliance control device provided by the present application acquires images of food ingredients through the generating unit during the cooking process to generate at least one food ingredient image, and to meet the personalized needs of users during cooking and improves user experience. Furthermore, the detecting unit can detect at least one food ingredient image with contaminant in its image content. In addition, in the case that contaminant exist in the image content of the at least one food ingredient image, the restoring unit restores the regions with contaminant in the food ingredient image, to eliminate the impact of contaminant on the quality of the food ingredient image, retain the original effect of the food ingredients on the food ingredient image, further meet the user's requirements for the quality of the food ingredient image, and further enhance the user experience of using the cooking appliance.

Furthermore, the food ingredient image comprises a plurality of sub-regions, and the detecting unit is configured to: traverse each food ingredient image to obtain the image features of each sub-region; and determine at least one target image based on the image features.

Furthermore, the image features comprise an optical flow direction, brightness, and color, and the detecting unit is further configured to: determine the food ingredient image as a target image in the case that the optical flow direction of any sub-region is toward the direction of gravity and the brightness is greater than a preset brightness; or determine the food ingredient image as a target image in the case that the optical flow direction of any sub-region is toward the direction of gravity and the color is white.

Furthermore, the image features comprise a refractive index, and the detecting unit is further configured to determine the food ingredient image as a target image in the case that the refractive index of any sub-region is less than a preset refractive index.

Furthermore, the image features comprise brightness, saturation, and contrast, and the detecting unit is further configured to determine the food ingredient image as a target image if the brightness, saturation, or contrast of any sub-region is greater than a preset value.

Furthermore, the detecting unit is further configured to determine the food ingredient image as a target image in the case that the difference between the image features of any two adjacent sub-regions is greater than a first preset difference.

Furthermore, the detecting unit is further configured to determine, in the case that the difference between the image features of the same sub-region in two food ingredient images generated at adjacent time points is greater than a second preset difference, the later generated food ingredient image as a target image.

Furthermore, the restoring unit is configured to: determine the change trend of the food ingredients in the sub-regions with contaminant in the target image based on at least one food ingredient image generated before the target image; and restore the sub-regions with contaminant in the target image based on the change trend of the food ingredients in the sub-regions with contaminant.

Furthermore, the restoring unit is further configured to: acquire a first sub-region with contaminant in the target image; acquire a second sub-region, which corresponds to the first sub-region, in a food ingredient image immediately preceding the target image; replace the first sub-region with the second sub-region; and perform smoothing processing on the replaced target image based on a preset algorithm to restore the at least one target image.

Furthermore, the restoring unit is further configured to: acquire a third sub-region with contaminant in the target image; acquire a fourth sub-region, which corresponds to the third sub-region, in the food ingredient image immediately preceding the target image; and adjust the image features of the third sub-region based on the image features of the fourth sub-region to restore the at least one target image.

Furthermore, the restoring unit is further configured to: input the at least one target image into a preset neural network to restore the at least one target image.

According to a third aspect of the present application, a cooking appliance control device is provided, comprising a processor and a memory, and the memory stores a program or an instruction that can run in the processor. The program or instruction, when executed by the processor, causes the processor to perform the steps of the control method for a cooking appliance according to the first aspect described above.

The cooking appliance control device provided by the present application comprises the processor and the memory, and further comprises a program or an instruction stored in the memory. The program or instruction, when executed by the processor, causes the processor to perform the steps of the control method for a cooking appliance according to the first aspect described above. Therefore, the cooking appliance control device has all the beneficial effects of the above control method for a cooking appliance, which will not be repeated here.

According to a fourth aspect of the present application, a cooking appliance is provided, comprising the cooking appliance control device according to any one of the above embodiments.

The cooking appliance provided by the present application comprises the cooking appliance control device according to any one of the above embodiments. Therefore, the cooking appliance has all the beneficial effects of the above cooking appliance control device, which will not be repeated here.

According to a fifth aspect of the present application, a computer-readable storage medium is provided, and a program or an instruction is stored in the computer-readable storage medium. The program or instruction, when executed by a processor, causes the processor to perform the control method for a cooking appliance according to any one of the above embodiments.

The computer-readable storage medium provided in the present application stores a program or an instruction therein. The program or instruction, when executed by a processor, causes the processor to perform the control method for a cooking appliance according to any one of the above embodiments, and therefore, the storage medium has all the beneficial effects of the aforementioned control method for a cooking appliance, which will not be repeated here.

The methods can be implemented in various different ways based on specific features and/or exemplary applications. For example, these methods can be implemented by a combination of hardware, firmware, and/or software. For example, in a hardware implementation, the processor can be implemented in one or more Application-Specific Integrated Circuits (ASICs), Digital Signal Processors (DSPs), Digital Signal Processing Devices (DSPDs), Programmable Logic Devices (PLDs), Field-Programmable Gate Arrays (FPGAs), controllers, microcontrollers, microprocessors, electronic devices, other device units for performing the aforementioned functions, and/or combinations thereof.

As computer-readable storage medium may be a tangible device that can retain and store instructions for use by an instruction execution device. The computer-readable storage medium can be, but is not limited to, an electronic storage device, a magnetic storage device, an optical storage device, an electromagnetic storage device, a semiconductor storage device, or any appropriate combination of the above devices. A non-exhaustive list of more specific examples of the computer-readable storage medium comprises: a portable computer floppy disk, a hard disk, a Random Access Memory (RAM), a Read-Only Memory (ROM), an Erasable Programmable Read-Only Memory (EPROM or flash memory), a Static Random Access Memory (SRAM), a portable Compact Disc Read-Only Memory (CD-ROM), a Digital Versatile Disc (DVD), a memory card, a floppy disk, an encoded mechanical device (e.g., a punched card or a groove with a raised structure in which instructions are recorded), and any appropriate combination of the above devices. The computer-readable storage medium as used herein should not be construed as a transitory signal itself, such as a radio wave or other freely propagating electromagnetic wave, an electromagnetic wave propagating through a waveguide or other transmission medium, or an electrical signal transmitted through a wire.

In the present application, the term of "a plurality of" indicates two or more than two, unless otherwise explicitly defined. The orientation or position relationships indicated by terms such as "upper" and "lower" are based on the orientation or position relationships shown in the accompanying drawings, and are only for the convenience of describing the present application and simplifying the description, and do not indicate or imply that the indicated device or element must have a specific orientation and be constructed and operated in a specific orientation. Therefore, they shall not be construed as limitations on the present application. Terms such as "connect", "install" and "fix" shall be understood in a broad sense. For example, "connect" may be a fixed connection, a detachable connection, or an integral connection; it may be a direct connection or an indirect connection through an intermediate medium. For those of ordinary skill in the art, the specific meanings of the above terms in the present application can be understood based on specific circumstances.

In the specification of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the specification, the illustrative expression of the above terms may not indicate the same embodiment or example. In addition, the described specific features, structures, materials or characteristics may be combined with each other in an appropriate method in one or more of any embodiments or examples.

The above-mentioned are merely some embodiments of the present application and are not intended to limit the present application, and for one skilled in the art, various modifications and changes may be made to the present application. Any modifications, equivalent substitutions, improvements and so on should be covered within the scope of protection of the present application.

## Claims

1. A control method for a cooking appliance, comprising:
during a process of cooking a food ingredient with the cooking appliance, generating at least one food ingredient image of the food ingredient;
detecting the at least one food ingredient image, and determining at least one target image with contaminant in its image content; and
restoring the at least one target image to a contaminant-free state.

2. The control method according to claim 1, wherein, the food ingredient image comprises a plurality of sub-regions, and the detecting the at least one food ingredient image and determining the at least one target image with contaminant in its image content comprises:
traversing each food ingredient image to acquire image features of each sub-region; and
determining the at least one target image based on the image features.

3. The control method according to claim 2, wherein, the image features comprise an optical flow direction, brightness, and color, and the determining the at least one target image based on the image features comprises:
determining the food ingredient image as the target image in a case that the optical flow direction of any of the sub-regions is toward the direction of gravity and the brightness is greater than a preset brightness; or
determining the food ingredient image as the target image in a case that the optical flow direction of any of the sub-regions is toward the direction of gravity and the color is white.

4. The control method according to claim 2, wherein, the image features comprise a refractive index, and the determining the at least one target image based on the image features comprises:
determining the food ingredient image as the target image in a case that the refractive index of any of the sub-regions is less than a preset refractive index.

5. The control method according to claim 2, wherein, the image features comprise brightness, saturation, and contrast, and the determining the at least one target image based on the image features comprises:
determining the food ingredient image as the target image in a case that the brightness, saturation, or contrast of any of the sub-regions is greater than a preset value.

6. The control method according to claim 2, wherein, the determining the at least one target image based on the image features comprises:
determining the food ingredient image as the target image in a case that a difference between the image features of any two adjacent sub-regions is greater than a first preset difference.

7. The control method according to claim 2, wherein, the determining the at least one target image based on the image features comprises:
in a case that a difference between the image features of a same sub-region in two food ingredient images generated at adjacent time points is greater than a second preset difference, determining the later generated food ingredient image as the target image.

8. The control method according to any one of claims 2 to 7, wherein, the restoring the at least one target image to the contaminant-free state comprises:
determining a change trend of the food ingredient in the sub-region with contaminant in the target image based on at least one food ingredient image generated before the target image; and
restoring the sub-region with contaminant in the target image based on the change trend of the food ingredient in the sub-region with contaminant.

9. The control method according to any one of claims 2 to 7, wherein, the restoring the at least one target image to the contaminant-free state comprises:
acquiring a first sub-region with contaminant in the target image;
acquiring a second sub-region, which corresponds to the first sub-region, in a food ingredient image immediately preceding the target image;
replacing the first sub-region with the second sub-region; and
performing smoothing processing on the replaced target image based on a preset algorithm to restore the at least one target image to the contaminant-free state.

10. The control method according to any one of claims 2 to 7, wherein, the restoring the at least one target image to the contaminant-free state comprises:
acquiring a third sub-region with contaminant in the target image;
acquiring a fourth sub-region, which corresponds to the third sub-region, in a food ingredient image immediately preceding the target image; and
adjusting the image features of the third sub-region based on the image features of the fourth sub-region to restore the at least one target image to the contaminant-free state.

11. The control method according to any one of claims 2 to 7, wherein, the restoring the at least one target image to the contaminant-free state comprises:
inputting the at least one target image into a preset neural network to restore the at least one target image to the contaminant-free state.

12. The control method according to any one of claims 1 to 7, wherein, the contaminant comprise a water droplet or water mist.

13. A cooking appliance control device, comprising:
a generating unit configured to generate at least one food ingredient image of a food ingredient during a process of cooking the food ingredient with a cooking appliance;
a detecting unit configured to detect the at least one food ingredient image and determine at least one target image with contaminant in its image content; and
a restoring unit configured to restore the at least one target image to a contaminant-free state.

14. A cooking appliance control device, comprising:
a processor and a memory, wherein, the memory stores a program or an instruction that runs in the processor; the program or instruction, when executed by the processor, causes the processor to perform steps of a control method for a cooking appliance according to any one of claims 1 to 12.

15. A cooking appliance, comprising:
a cooking appliance control device according to claim 13 or claim 14.

16. A computer-readable storage medium, wherein, a program or an instruction are stored in the computer-readable storage medium; the program or instruction, when executed by a processor, causes the processor to perform steps of a control method for a cooking appliance according to any one of claims 1 to 12.
